# EUROPÄISCHE PATENTANMELDUNG

(11) **EP 3 536 639 A1**
(43) Veröffentlichungstag der Anmeldung: **11.09.2019**
(21) Anmeldenummer: 19158467.1
(22) Anmeldetag: 21.02.2019
(51) Int. Cl.: B65G 47/90, B25J 9/00, B05B 13/02

(54) **VERFAHREN UND VORRICHTUNG ZUR HANDHABUNG EINES RADES**

(30) Priorität: 07.03.2018 DE 102018105196
(71) Anmelder: Eisenmann SE, 71032 Böblingen (DE)
(72) Erfinder: Kirchner, Marc Walter, 69245 Bammental (DE)
(74) Vertreter: Ostertag & Partner Patentanwälte mbB

(57) **Zusammenfassung**

Bei einem Verfahren zur Handhabung eines Rades (10), das von einer Spindel (12) getragen wird, greift ein Roboterarm (40) die Spindel an einer Robotergreifposition (20) und entnimmt sie von einem Transportfahrzeug (30). Da das Rad (10) nicht unmittelbar von dem Roboterarm (40) gegriffen wird, werden Schäden am Rad (10) vermieden, die durch eine Klemmung des Roboterarms (40) am Rad (10) verursachten werden können. Vorzugsweise gibt vor oder bei dem Entnehmen der Spindel (12) von dem Transportfahrzeug (30) ein Verriegelungselement (16) an dem Transportfahrzeug (30) die Spindel (12) frei.

## Beschreibung

### HINTERGRUND DER ERFINDUNG

### 1. Gebiet der Erfindung

Die Erfindung betrifft ein Verfahren zur Handhabung eines Rades und eine Vorrichtung mit einer Spindel, einem Transportfahrzeug und einem Roboterarm zur Durchführung des Verfahrens.

### 2. Beschreibung des Standes der Technik

Bei Lackieren von Rädern durchlaufen die Räder mehrere Bearbeitungsstationen. Dabei werden die Räder häufig auf Spindeln transportiert, damit die Räder mit minimaler Auflagefläche gehalten und leicht mit Hilfe einer Klemmvorrichtung entnommen werden können. Zum Transport der Spindeln wird häufig ein Förderer der Art eingesetzt, wie er beispielhaft aus DE 10 2008 006 171 B3 bekannt ist. Dabei sind die Spindeln mit einer horizontal verlaufenden Endloslaschenkette verbunden, welche die Spindeln entlang einer Förderrichtung fördert.

Um ein Rad einer Bearbeitungsstation zuzuführen, wird das Rad mittels einer von einem Handhabungsgerät getragenen Klemmvorrichtung gegriffen, von der Spindel abgehoben und am gewünschten Ort in der ersten Bearbeitungsstation abgelegt. Dabei sind die Spindeln fest an den Transportfahrzeugen montiert. Bei einigen Bearbeitungsschritten müssen die Räder nicht abgehoben werden, sondern können während der Bearbeitung auf den Spindeln verbleiben.

Nach Abschluss der Bearbeitung nimmt die Klemmvorrichtung das bearbeitete Rad auf und legt es auf der gleichen oder auf einer anderen freien Spindel ab. Anschließend wird das Rad auf der Spindel mittels des Transportfahrzeugs zur nächsten Bearbeitungsstation transportiert.

Durch die Klemmung des Rades mittels der Klemmvorrichtung können jedoch auf Grund der Kräfte, die auf das Rad ausgeübt werden, Kratzer, Greifabdrücke oder Verformungen an dem Rad entstehen.

Des Weiteren werden häufig Räder mit unterschiedlicher Form und Größe in einer Lackieranlage bearbeitet. Da die Spindeln fest mit dem jeweiligen Transportfahrzeug verbunden sind, muss dieselbe Spindelart für alle Räder verwendet werden. Deshalb ist für jedes Rad ein Höhenausgleich der Fördertechnik notwendig, um die Handhabung des Rades für unterschiedliche Radgrößen zu ermöglichen.

### ZUSAMMENFASSUNG DER ERFINDUNG

Aufgabe der Erfindung ist es deswegen, ein Verfahren zur Handhabung eines Rades bereitzustellen, bei dem die Gefahr von Schäden oder Lackfehlern am Rad verringert wird und die Räder flexibler und effizienter transportiert werden können. Aufgabe der Erfindung ist es ferner, eine zur Durchführung des Verfahrens geeignete Vorrichtung anzugeben.

Diese Aufgabe wird durch ein Verfahren zur Handhabung eines von einer Spindel getragenen Rades gelöst, bei dem ein Roboterarm die Spindel an einer Robotergreifposition greift und von einem Transportfahrzeug entnimmt. Das Verfahren hat den Vorteil, dass das Rad im Gegensatz zum genannten Stand der Technik nicht unmittelbar von dem Roboterarm gegriffen wird. Dadurch werden Schäden am Rad vermieden, die durch die Klemmung des Roboterarms am Rad verursachten werden können.

Des Weiteren können Spindeln eingesetzt werden, die jeweils an einen Radtyp individuell angepasst sind, insbesondere an die Breite des Rades. Durch die Anpassung der Geometrie, insbesondere die Höhe, der Spindeln an die Abmessungen des jeweiligen Rades kann für jedes Rad dieselbe Höhe innerhalb eines Transportabschnitts eingestellt werden. Dadurch wird eine Ablagevarianz vermieden, die in der Regel von der Handhabungsanlage der Lackieranlage auszugleichen ist.

In einer Ausführungsform gibt vor oder bei dem Entnehmen der Spindel von dem Transportfahrzeug ein Verriegelungselement an dem Transportfahrzeug die Spindel frei. Das Verriegelungselement sichert die Spindeln an dem Transportfahrzeug und verhindert Bewegungen der Spindel (mit Ausnahme von Drehungen um die Spindellängsachse) relativ zu dem Transportfahrzeug. Durch die Freigabe der Spindel durch das Verriegelungselement kann die Spindel mit dem davon gehaltenen Rad schnell und verschleißarm von dem Transportfahrzeug entnommen werden, um anschließend entweder in einer Bearbeitungsstation oder auf einem anderen Transportfahrzeug abgesetzt zu werden, wo die Spindel wieder verriegelt wird. Unter Verriegelung wird hierbei eine formschlüssige und/oder kraftschlüssige Fixierung der Spindel mittels eines bewegbaren Verriegelungselements verstanden.

Alternativ zu einem Verriegelungselement kann auch eine Übergangspassung zwischen der Spindel und dem Transportfahrzeug zur Befestigung der Spindel an dem Transportfahrzeug vorgesehen sein. Dadurch ist der konstruktive Aufwand der Befestigung geringer, jedoch ist ein hoher Verschleiß an der Übergangspassung bei häufigem Entnehmen und Einsetzen der Spindel in das Transportfahrtzeug zu erwarten. Weiter ist eine magnetische Befestigung der Spindel an dem Transportfahrzeug möglich. Dadurch kann die Spindel besonders schnell und verschleißarm fixiert werden.

Dabei kann es vorteilhaft sein, wenn beim Entnehmen der Spindel aus dem Transportfahrzeug das Verriegelungselement selbsttätig die Spindel freigibt, wenn eine von dem Roboterarm auf die Spindel ausgeübte Zugkraft einen Schwellenwert überschreitet. Dabei wird das Verriegelungselement nicht aktiv entriegelt, sondern das Lösen der Spindel erfolgt erst durch eine Zugbewegung der Spindel mittels des Roboterarms. Dabei übt der Roboterarm eine im Wesentlichen entlang der Spindellängsachse gerichtete Zugkraft auf die Spindel aus. Nach Überschreiten eines Schwellenwerts der Zugkraft wird die Spindel von dem Verriegelungselement freigegeben. Der Schwellenwert entspricht im Wesentlichen der Gewichtskraft der Spindel und, falls vorhanden, des Rades und die zu überwindende Reibkraft zwischen dem Verriegelungselement und der Spindel. Der Schwellenwert kann individuell eingestellt werden, z.B. über die Normalkraft, die von dem Verriegelungselement auf die Spindel ausgeübt wird.

Die selbsttätige Freigabe des Verriegelungselements erfolgt vorzugsweise über konstruktive Merkmale an dem Verriegelungselement, z.B. über die Form des der Spindel zugewandten Endes des Verriegelungselements und/oder über die Form der Spindel.

Alternativ kann beim Entnehmen der Spindel aus dem Transportfahrzeug das Verriegelungselement mit Hilfe eines stationär angeordneten Stellantriebs die Spindel freigeben. Der Stellantrieb kann dabei z.B. als Schrittmotor oder Piezomotor ausgeführt sein. Ein Elektromagnet als Stellantrieb ist ebenso denkbar. Der Stellantrieb kann durch ein optisches Element, z.B. eine Lichtschranke, aktiviert werden. Ebenso ist es möglich, dass die Steuerung des Roboters die Aktivierung des Stellantriebs auslöst.

Alternativ dazu kann vor dem Entnehmen der Spindel aus dem Transportfahrzeug der Roboterarm das Verriegelungselement oder ein damit verbundenes mechanisches Stellelement betätigen und dadurch die Spindel freigeben. Alternativ dazu kann das mechanische Stellelement jedoch auch mittels Handbetätigung eines Menschen betätigt werden, um die Spindel freizugeben. Weiter ist eine Kulisse denkbar, die neben der Transportstrecke stationär angeordnet ist und das Verriegelungselement betätigt.

Hinsichtlich der Vorrichtung wird die eingangs genannte Aufgabe gelöst durch eine Vorrichtung zur Handhabung eines Rades mit einer Spindel, die dazu eingerichtet ist, das Rad zu tragen, einem Transportfahrzeug und mit einem Roboterarm. Erfindungsgemäß ist das Transportfahrzeug dazu eingerichtet, die Spindel lösbar aufzunehmen. Die Spindel ist von dem Roboterarm an einer Robotergreifposition greifbar und von dem Transportfahrzeug entnehmbar.

In einer Ausführungsform ist an dem Transportfahrzeug ein Verriegelungselement zum Verriegeln und Freigeben der Spindel vorgesehen. Das Verriegelungselement kann dabei als geschnittene Kugel oder geschnittener Zylinder ausgebildet sein. Dabei ist es vorteilhaft, das Verriegelungselement um eine zur Schnittebene parallele Achse der geschnittenen Kugel oder des geschnittenen Zylinders drehbar in dem Transportfahrzeug zu lagern. Jedoch kann das Verriegelungselement auch zum Verriegeln der Spindel translatorisch bewegbar sein. In diesem Fall wäre z.B. die Kugel als Verriegelungselement nicht geschnitten, sondern vollständig kugelförmig.

Das Verriegelungselement ist bevorzugt dazu geeignet, selbsttätig die Spindel freizugeben, sobald eine von dem Roboterarm an der Spindel ausgeübte Zugkraft einen Schwellenwert überschreitet.

Alternativ kann zum Verriegeln und Freigeben der Spindel das Verriegelungselement mittels eines stationär angeordneten Stellantriebs steuerbar sein.

In einer Ausführungsform ist eine Nut an einer Umfangsfläche der Spindel vorgesehen, in die das Verriegelungselement des Transportfahrzeugs im verriegelten Zustand der Spindel eingreift. Das Verriegelungselement ist dabei bevorzugt als Stift ausgeführt, dessen Spitze in der Nut des Transportfahrzeugs eingreift.

Alternativ kann ein ausfahrbarer Stift mit einer Gummirolle vorgesehen sein, die im verriegelten Zustand an die Umfangsfläche der Spindel angreift und durch eine ausreichende Anpresskraft die Spindel an dem Transportfahrzeug verriegelt. Dadurch kann die Nut an der Spindel entfallen. Des Weiteren ist auf Grund der geringeren Reibung zwischen dem Verriegelungselement und der Spindel der Verschleiß geringer.

In einer Ausführungsform ist zum Entnehmen der Spindel aus dem Transportfahrzeug das Verriegelungselement oder ein an dem Transportfahrzeug außen angeordnetes mechanisches Stellelement von dem Roboterarm betätigbar und dadurch die Spindel freigebbar.

Die Vorrichtung zur Handhabung eines Rades mit einer Spindel kann zusätzlich eine Kontrollvorrichtung umfassen, bei der nach der Verriegelung der Spindel an dem Transportfahrzeug die sichere Fixierung der Spindel an dem Transportfahrzeug mittels der Verriegelung kontrolliert wird. Die Kontrolle kann z.B. unter Verwendung des Roboterarms durchgeführt werden. Der Roboterarm kann, nachdem die Spindel auf das Transportfahrzeug gesetzt wurde und das Verriegelungselement die Spindel verriegelt hat, eine Zugkraft auf die Spindel ausüben. Die Kontrollvorrichtung stuft die Verriegelung als fest ein, wenn die Zugkraft des Roboterarms einen Schwellenwert erreicht, ohne dass sich die Spindel vom Transportfahrzeug löst. Alternativ kann auch eine Lichtschranke oder ein anderes optisches Element zur Detektion des verriegelten Zustands des Verriegelungselements vorgesehen sein.

Weiter ist Gegenstand der Erfindung eine Spindel zum Transport eines Rades mit einem Radaufnahmeelement und einer Robotergreifposition, an der die Spindel von einem Roboterarm greifbar und bewegbar ist. Die Spindel ist erfindungsgemäß dazu eingerichtet, mit einem Transportfahrzeug lösbar verriegelt zu werden.

Dabei kann an der Spindel eine Verriegelungsaufnahme zum Koppeln mit dem Transportfahrzeug ausgebildet sein, um ein Verriegelungselement des Transportfahrzeugs aufzunehmen, wobei die Verriegelungsaufnahme bevorzugt eine umlaufende Nut ist. Alternativ dazu können die Fertigungsmaße so gewählt werden, dass eine Übergangs- oder Presspassung mit dem Transportfahrzeug möglich ist.

Die Spindel kann an der Robotergreifposition eine mit der Spindel befestigte Buchse aufweisen. Die Buchse kann insbesondere konzentrisch zur Spindel befestigt sein. Insbesondere kann die Buchse mittels einer Presspassung oder einer Nut-Feder-Verbindung an der Spindel befestigt sein. Alternativ dazu kann die Robotergreifposition als eine gehärtete Stelle der Spindel ausgebildet sein.

Die Spindel ist vorzugsweise mittels eines daran befestigten Zahnrades mit Hilfe einer vom Transportfahrzeug unabhängigen Betätigungseinrichtung drehbar. Alternativ kann die Spindel mittels eines in dem Transportfahrzug angeordneten Elektromotors angetrieben werden.

Gegenstand der Erfindung ist außerdem ein Transportfahrzeug zum Transportieren von Spindeln, die zum Transport von Rädern geeignet sind, wobei das Transportfahrzeug eine Spindelführung zur Aufnahme einer Spindel aufweist. Erfindungsgemäß ist ein Verriegelungselement zum Verriegeln und Freigeben der Spindel an dem Transportfahrzeug vorgesehen.

In einer Ausführungsform ist das Verriegelungselement selbsttätig entriegelbar, wenn eine an der Spindel ausgeübte Zugkraft einen Schwellenwert überschreitet.

Bevorzugt ist das Verriegelungselement mit Hilfe eines stationär angeordneten Stellantriebs entriegelbar. Der Stellantrieb kann dabei z.B. als Schrittmotor oder Piezomotor ausgeführt sein. Alternativ kann der Stellantrieb eine Kulisse sein.

Besonders bevorzugt kann die Spindelführung trichterförmig sein. Alternativ dazu kann die Spindelführung eine einfache Zylinderform aufweisen. Dadurch ergibt sich eine größere axiale Führungsfläche für einen darin einzusetzenden Gegenstand, jedoch ist der Vorgang des Einführens aufwändiger.

Besonders bevorzugt weist die Spindelführung der Spindel eine Verschleißbuchse auf. Eine Verschleißbuchse wird im Allgemeinen dazu ausgelegt, Verschleiß an der Spindel zu vermeiden. Dies wird vor allem dadurch erreicht, dass das Material der Verschleißbuchse eine geringere Härte als die zu tragende Spindel aufweist. Dadurch soll an der Spindel wenig Verschleiß in Form von Materialabtrag entstehen. Die Verschleißbuchse kann deshalb vor allem als austauschbares Bauteil ausgeführt sein.

Alternativ dazu kann die Spindelführung ohne Verschleißbuchse ausgeführt sein, jedoch mit einem größeren Spiel für den einzusetzenden Gegenstand damit weniger Reibung.

Vorzugsweise ist das Transportfahrzeug in einer Führung eines Förderers angeordnet. In der Führung ist eine angetriebene Förderette angeordnet, mit der die Transportfahrzeuge verbunden sind. Dabei kann das Transportfahrzeug insbesondere lösbar mit der Kette verbunden sein, z.B. mittels eines an dem Transportfahrzeug vorgesehenen Mitnehmers, der von einer umlaufenden Förderkette oder von einem an der Förderkette befestigten Element formschlüssig gegriffen wird, um das Transportfahrzeug entlang der Führung zu fördern. Die umlaufende Förderkette kann jedoch bei Bedarf das Transportfahrzeug passieren, ohne dass die Förderkette das Transportfahrzeug greift. Dadurch ist es möglich, bestimmte Förderfahrzeuge mittels der Förderkette zu fördern, während andere Förderfahrzeuge stillstehen. Dieses Förderprinzip ist im Allgemeinen als Inverted Power and Free-Förderer bekannt.

Dabei kann das Transportfahrzeug Rollen als Lauf- und/oder Führungsmittel aufweisen, um einen leichtgängigen Lauf bzw. eine leichtgängig Führung des Transportfahrzeugs zu erzielen. Anstelle der Rollen können auch Gleitflächen, z.B. Kufen, vorgesehen sein.

### KURZE BESCHREIBUNG DER ZEICHNUNGEN

Nachfolgend werden Ausführungsbeispiele der Erfindung anhand der Zeichnungen näher erläutert. In diesen zeigen:
- Figur 1: eine erfindungsgemäße Vorrichtung zur Handhabung eines Rades in einer Seitenansicht gemäß eines ersten Ausführungsbeispiels;
- Figur 2: einen Teil der in der Figur 1 gezeigten Vorrichtung, wobei die Spindel im Transportfahrzeug verriegelt ist;
- Figur 3: den in der Figur 2 gezeigten Teil der Vorrichtung, wobei die Spindel entriegelt ist, und einen Roboterarm, der die Spindel ergreift;
- Figur 4: einen Teil einer erfindungsgemäßen Vorrichtung gemäß einer zweiten Ausführungsform, wobei die Spindel im Transportfahrzeug verriegelt ist;
- Figur 5: den in der Figur 4 gezeigten Teil der Vorrichtung, wobei die Spindel entriegelt ist.

### BESCHREIBUNG BEVORZUGTER AUSFÜHRUNGSBEISPIELE

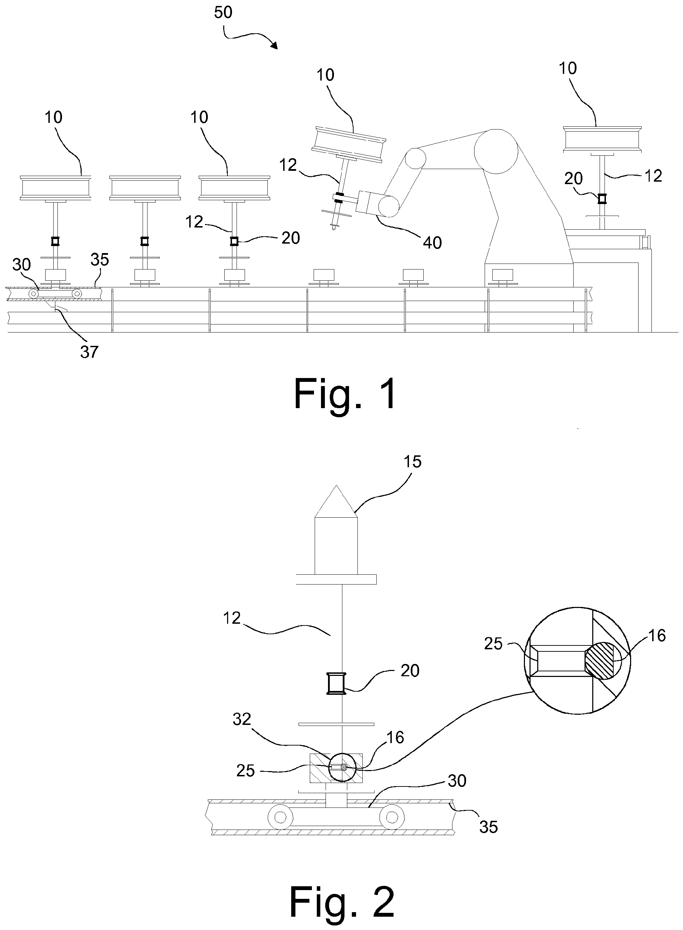

Die Figur 1 zeigt eine Vorrichtung 50 zur Handhabung eines Rades 10. In einer Lackieranlage werden mehrere Räder 10 auf Spindeln 12 getragen. Jede Spindel 12 ist mit einem in einer Führung 35 angeordneten Transportfahrzeug 30 verbunden. Jedes Transportfahrzeug 30 weist einen Mitnehmer 37 auf, der von einer umlaufenden Förderkette (nicht abgebildet) gefasst wird. Der Mitnehmer 37 kann jedoch seine Lage so verändern, dass der Mitnehmer 37 von der Förderkette nicht gefasst wird und das Transportfahrzeug 30 somit von der Förderkette nicht gefördert wird.

Es kann auch vorteilhaft sein, mehrere Spindeln 12, die mit einem einzigen Transportfahrzeug 30 verbunden sind, vorzusehen. Die Spindeln 12 werden durch die Lackieranlage mittels der Transportfahrzeuge 30 bewegt und weisen jeweils eine Robotergreifposition 20 auf, an der die Spindel mittels eines Roboterarms 40 gegriffen werden kann, um sie einer Bearbeitungsstation zuzuführen oder auf einen anderen Transportabschnitt zu überführen. Die Figur 2 zeigt in der Figur 1 gezeigte Spindel 12, die mittels eines Verriegelungselements 16 an dem jeweiligen Transportfahrzeug 30 verriegelt ist. Alternativ kann eine Übergang- oder Presspassung zwischen dem Transportfahrzeug 30 und der Spindel 12 vorgesehen sein.

Das Verriegelungselement 16 ist als geschnittene Kugel ausgeführt, die um eine zur Schnittebene parallele Achse drehbar in dem Transportfahrzeug 30 gelagert ist. Alternativ kann das Verriegelungselement 16 auch als geschnittener Zylinder ausgeführt sein. Im verriegelten Zustand greift ein nicht-geschnittener Bereich der Kugel in eine in der Spindel ausgebildete umlaufende Nut 25 ein, um die Spindel 12 an dem Transportfahrzeug 30 zu fixieren. Die Spindel 12 ist in der Regel mittels eines Zahnrades drehbar. Eine umlaufende Nut 25 ist daher besonders vorteilhaft, da das Verriegelungselement 16 während der Drehung in der Nut 25 im Eingriff bleibt.

Bei Ausführungen der Spindel 12 ohne Nut 25 kann das Verriegelungselement 16 eine Rolle aufweisen, die gegen die Oberfläche der Spindel 12 gedrückt wird. Bei der Drehung der Spindel 12 dreht sich die Rolle des Verriegelungselements 16, sodass während der Drehung der Spindel 12 eine Kraft gegen die Oberfläche der Spindel 12 ausgeübt wird.

Die Spindel 12 weist eine Spindelführung 32 auf, die zur Aufnahme der Spindel 12 in dem Transportfahrzeug 30 ausgelegt ist. Die Spindelführung 32 kann insbesondere eine Verschleißbuchse aufweisen, die den Verschleiß an der Spindelführung 32 des Transportfahrzeugs 30 durch wiederholtes Einsetzen und Entnehmen der Spindel 12 minimiert. Im Allgemeinen besteht eine Innenfläche der Verschleißbuchse aus einem weicheren Material als die Spindel 12. Durch die Paarung unterschiedlicher Materialhärten entsteht der Verschleiß im Wesentlichen an der Verschleißbuchse, so dass die Spindel 12 wenig Verschleiß erfährt. Damit muss lediglich die preisgünstige Verschleißbuchse ausgetauscht werden, sobald erhöhte Verschleißerscheinungen an der Verschleißbuchse auftreten.

Die Spindel 12 weist ferner einen Aufnahmedorn 15 zur Aufnahme eines Rades 10 und eine Robotergreifposition 20 auf, an der die Spindel 12 von einem Roboterarm 40 greifbar ist. Die Robotergreifposition 20 umfasst bevorzugt eine Buchse, die im Wesentlichen konzentrisch zur Spindel 12 angeordnet ist. Bevorzugt besteht die Buchse aus gehärtetem Material, um Verschleiß der Robotergreifposition 20 zu minimieren. Die Form der Buchse hängt im Wesentlichen von der Form des Greifers des Roboterarms 40 ab. Bevorzugt hat die Buchse ist eine im Wesentlichen kreiszylindrische Außenfläche, jedoch kann auch eine eckige Außenfläche zur besseren Greifbarkeit der Spindel 12 vorteilhaft sein. Die Buchse kann mittels Press- oder Übergangspassung an der Spindel 12 befestigt sein. In Betracht kommt ferner eine stoffschlüssige Verbindung, z.B. mittels Punktverschweißung, oder eine Nut-/Federverbindung.

Alternativ dazu kann die Robotergreifposition 20 als eine gehärtete Stelle der Spindel ausgebildet sein und/oder eine griffige Struktur zum rutschfreien und verschließarmen Greifen der Spindel aufweisen.

Der Roboterarm greift die Spindel 12 an der Robotergreifposition 20, um sie von dem Transportfahrzeug 30 zu entnehmen. Vorzugsweise kann der Roboterarm 40 die Spindel 12 erst entnehmen, nachdem die Spindel 12 von dem Verriegelungselement 16 freigegeben wurde, z.B. mittels eines mit dem Verriegelungselement 16 verbundenen Stellantriebs.

Das Verriegelungselement 16 kann auch selbsttätig die Spindel 12 freigeben, indem der Roboterarm 40 eine Zugkraft an der Spindel 12 ausübt, die einen Schwellenwert überschreitet. Dieser Schwellenwert kann dadurch eingestellt werden, dass eine Feder an dem Verriegelungselement 16 vorgesehen ist, die eine mittels der Federsteifigkeit einstellbare Kraft auf die Spindel 12 ausübt. Die daraus resultierende, entgegen der Zugkraft des Roboterarms 40 gerichtete Reibkraft ist maßgebend für den zu erreichenden Schwellenwert. Die Reibkraft kann dabei auch durch die beschriebene Übergangs- bzw. Presspassung entstehen.

Der Roboterarm 40 legt anschließend das Rad 10 an einer Bearbeitungsstation oder auf einem vorzugsweise gleichartig ausgebildeten Transportfahrzeug 30 des nächsten Transportabschnitts ab. Das Verriegeln der Spindeln 12 an den Transportfahrzeugen 30 des nächsten Transportabschnitts kann dabei, ähnlich wie das Entriegeln bei der Entnahme, selbsttätig erfolgen, z.B. mittels einer Feder, die beim Einführen der Spindel 12 in die Spindelführung 32 des Transportfahrzeugs 30 komprimiert wird.

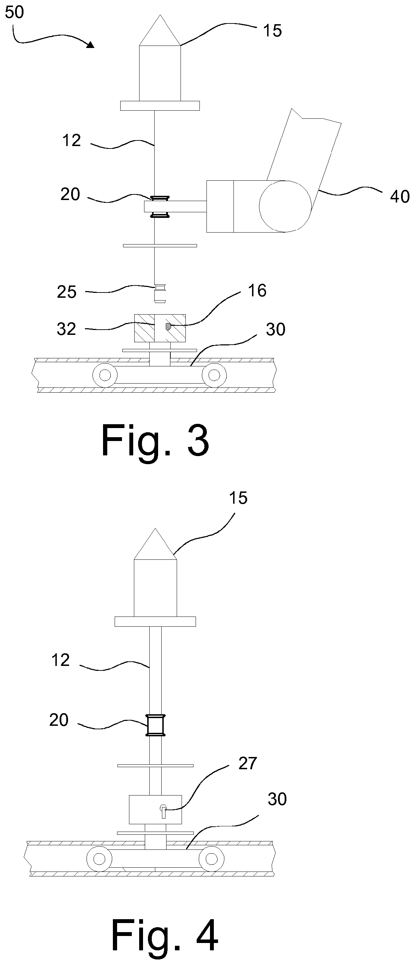

Die Figur 3 zeigt den in der Figur 2 gezeigten Teil der Vorrichtung 50 im entriegelten Zustand der Spindel 12. Das als geschnittene Kugel ausgebildete Verriegelungselement 16 ist gegenüber der Figur 2 um 180° gedreht. Damit ist der geschnittene Bereich des Verriegelungselements 16 der Spindel 12 zugewandt, sodass das Verriegelungselement 16 nicht mehr in die in Figur 3 gezeigte Nut der Spindel 12 eingreift. Die Spindel 12 kann nun von dem Roboterarm 40 an der Robotergreifposition 20 gegriffen und zum gewünschten Ort transportiert werden.

Die Figur 4 zeigt ein mit dem Verriegelungselement 16 verbundenes mechanisches Stellelement 27. In der gezeigten Lage des mechanischen Stellelements 27 ist das Verriegelungselement 16 verriegelt. Das mechanische Stellelement 27 ist durch menschliche Kraft oder durch den Roboterarm 40 betätigbar. Alternativ kann das mechanische Stellelement 27 durch einen Stellantrieb ersetzt werden.

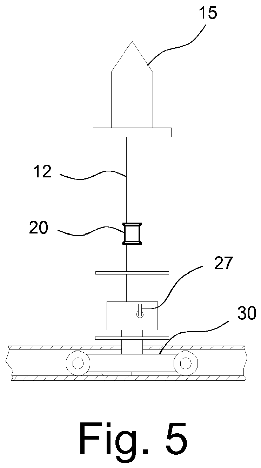

Die Figur 5 zeigt das mechanische Stellelement 27 aus Figur 4, wobei das mechanische Stellelement 27 in einer dem entriegelten Zustand des Verriegelungselements 16 entsprechenden Lage ist.

## Patentansprüche

1. Ein Verfahren zur Handhabung eines Rades (10), das von einer Spindel (12) getragen wird,
**dadurch gekennzeichnet, dass**
ein Roboterarm (40) die Spindel (12) an einer Robotergreifposition (20) greift und von einem Transportfahrzeug (30) entnimmt.

2. Das Verfahren nach Anspruch 1, **dadurch gekennzeichnet, dass** vor oder bei dem Entnehmen der Spindel (12) von dem Transportfahrzeug (30) ein Verriegelungselement (16) an dem Transportfahrzeug (30) die Spindel (12) freigibt.

3. Das Verfahren nach Anspruch 2, **dadurch gekennzeichnet, dass** beim Entnehmen der Spindel (12) aus dem Transportfahrzeug (30) das Verriegelungselement (16) selbsttätig die Spindel (12) freigibt, wenn eine von dem Roboterarm (40) an der Spindel (12) ausgeübte Zugkraft einen Schwellenwert überschreitet.

4. Das Verfahren nach Anspruch 2, **dadurch gekennzeichnet, dass** beim Entnehmen der Spindel (12) aus dem Transportfahrzeug (30) das Verriegelungselement (16) mit Hilfe eines stationär angeordneten Stellantriebs die Spindel (12) freigibt.

5. Das Verfahren nach Anspruch 2, **dadurch gekennzeichnet, dass** vor dem Entnehmen der Spindel (12) aus dem Transportfahrzeug (30) der Roboterarm (40) das Verriegelungselement (16) oder ein damit verbundenes mechanisches Stellelement 27 betätigt und dadurch die Spindel (12) freigibt.

6. Eine Vorrichtung (50) zur Handhabung eines Rades (10) mit:
einer Spindel (12), die dazu eingerichtet ist, das Rad (10) zu tragen,
einem Transportfahrzeug (30) und mit
einem Roboterarm (40),
**dadurch gekennzeichnet, dass**
das Transportfahrzeug (30) dazu eingerichtet ist, die Spindel (12) lösbar aufzunehmen, und dass die Spindel (12) von dem Roboterarm (40) an einer Robotergreifposition (20) greifbar und von dem Transportfahrzeug (30) entnehmbar ist.

7. Die Vorrichtung (50) nach Anspruch 6, **dadurch gekennzeichnet, dass** an dem Transportfahrzeug (30) ein Verriegelungselement (16) zum Verriegeln und Freigeben der Spindel (12) vorgesehen ist.

8. Die Vorrichtung (50) nach Anspruch 7, **dadurch gekennzeichnet, dass** das Verriegelungselement (16) dazu geeignet ist, selbsttätig die Spindel (12) freizugeben, sobald eine von dem Roboterarm (40) an der Spindel (12) ausgeübte Zugkraft einen Schwellenwert überschreitet.

9. Die Vorrichtung (50) nach Anspruch 7, **dadurch gekennzeichnet, dass** zum Verriegeln und Freigeben der Spindel (12) das Verriegelungselement (16) mittels eines stationär angeordneten Stellantriebs steuerbar ist.

10. Die Vorrichtung (50) nach einem der Ansprüche 7 bis 9, **dadurch gekennzeichnet, dass** eine Nut (25) an einer Umfangsfläche der Spindel (12) vorgesehen ist, in die das Verriegelungselement (16) des Transportfahrzeugs (30) im verriegelten Zustand der Spindel (12) eingreift.

11. Die Vorrichtung (50) nach Anspruch 7 oder 10, **dadurch gekennzeichnet, dass** zum Entnehmen der Spindel (12) aus dem Transportfahrzeug (30) das Verriegelungselement (16) oder ein an dem Transportfahrzeug (30) außen angeordnetes mechanisches Stellelement von dem Roboterarm (40) betätigbar und dadurch die Spindel (12) freigebbar ist.

12. Ein Transportfahrzeug (30) zum Transportieren von Spindeln (12), die zum Transport von Rädern geeignet sind, mit:
einer Spindelführung (32) zur Aufnahme einer Spindel (12)
**dadurch gekennzeichnet, dass**
ein Verriegelungselement (16) zum Verriegeln und Freigeben der Spindel (12) an dem Transportfahrzeug (30) vorgesehen ist.

13. Das Transportfahrzeug (30) nach Anspruch 12, **dadurch gekennzeichnet, dass** das Verriegelungselement (16) selbsttätig entriegelbar ist, wenn eine an der Spindel (12) ausgeübte Zugkraft einen Schwellenwert überschreitet.

14. Das Transportfahrzeug nach Anspruch 12, **dadurch gekennzeichnet, dass** das Verriegelungselement (16) mit Hilfe eines stationär angeordneten Stellantriebs entriegelbar ist.

15. Das Transportfahrzeug (30) nach Anspruch 12, **dadurch gekennzeichnet, dass** das Verriegelungselement (16) als parallel zu seiner Längsachse geschnittener Zylinder oder eine geschnittene Kugel ausgebildet und drehbar gelagert ist.

16. Das Transportfahrzeug (30) nach einem der Ansprüche 12 bis 15, **dadurch gekennzeichnet, dass** die Spindelführung (32) trichterförmig ist.

17. Das Transportfahrzeug (30) nach einem der Ansprüche 12 bis 16, **dadurch gekennzeichnet, dass** die Spindelführung (32) der Spindel (12) eine Verschleißbuchse (34) aufweist.
